# EUROPEAN PATENT SPECIFICATION

(11) **EP 3 381 837 B1**
(45) Date of publication and mention of the grant of the patent: **15.12.2021**
(21) Application number: 18165036.7
(22) Date of filing: 29.03.2018
(51) Int. Cl.: B65D 81/00, B65D 43/00, H04B 5/00, A47J 47/02

(54) **SYSTEM FOR PRESERVING FOODSTUFFS**
SYSTEM ZUR KONSERVIERUNG VON LEBENSMITTEL
SYSTÈME DE CONSERVATION DES ALIMENTS

(30) Priority: 31.03.2017 IT 201700035801; 11.08.2017 IT 201700093251
(43) Date of publication of application: 03.10.2018
(73) Proprietor: H24INVENT SRL, 30172 Mestre, Venezia (IT)
(72) Inventor: RANZATO, Mr. Enrico, 31030 Dosson di Casier (Treviso) (IT)
(74) Representative: Di Bernardo, Antonio

(56) References cited:
- EP-A2- 2 322 999
- WO-A1-03/087955
- US-A1- 2004 100 380
- US-A1- 2009 268 989
- US-A1- 2013 076 488

## Description

### Technical field

The present invention relates, in general, to a system for preserving foodstuffs and, more particularly, to a system for preserving foodstuffs configured to inform the user about the expiry date of said foodstuffs.

### Background of the invention

Foodstuffs are organic substances which deteriorate more or less rapidly under the effect of external factors such as light, air and water. These external factors in fact result in the multiplication of microorganisms present inside the foodstuffs.

The nature of the deterioration depends principally on the microbial community, composed of one or more different species, which becomes active at the time of deterioration, and the chemical or physical changes which it is able to produce, altering one or more components of the foodstuff.

Following deterioration, the original organoleptic characteristics of a foodstuff, such as smell, taste, colour and consistency, are modified. A foodstuff is considered to have deteriorated when it becomes unacceptable from a sensorial point of view and therefore can no longer be used by the consumer.

It is estimated that nowadays about 25% of foodstuffs are wasted as a result of deterioration, with huge losses from an economic point of view.

In order to avoid such wastage and ensure that the foodstuffs are consumed before they deteriorate, the food products, in particular those which perish rapidly, such as fresh milk products, fresh cheeses, fresh meat, fresh fish products, packaged salads and similar foodstuffs, are provided with an expiry date.

The expiry date is typically displayed on the packaging of the food product and indicates the date until when the foodstuff is hygienically suitable for consumption, if kept in the correct storage conditions.

Typically the expiry date consists of the indication - in order - of the day, month and, if appropriate, year. Once the expiry date has passed by, the foodstuff may constitute a danger for health owing to the bacterial proliferation, and therefore may no longer be eaten.

In modern-day society the pace of life is becoming increasingly more hectic and often consumers, after acquiring one or more food products, despite the expiry date shown on the packaging, forget to consume the foodstuffs before the date shown. It thus happens that, once acquired, many foodstuffs deteriorate and must be thrown away, with a consequent wastage of food.

According to the present state of the art, numerous devices, the purpose of which is to safeguard the freshness and the integrity of the foodstuffs, are known. For example, bag closing clips and hermetically sealed containers made of a large variety of materials are known and widespread.

In particular bag closing clips which are able to indicate to the consumer the expiry date of a foodstuff contained in the bag are known. These known bag closing clips comprise, in particular, a keypad, a display, a processor, a piezoelectric acoustic signalling device and a solar energy battery for powering these components.

The user, by means of the keypad, enters on the display of the clip the expiry date shown on the packaging of the product contained in the bag and then closes, using the clip, the packaging of the product to be stored. The display on the clip shows the days left before expiry of the product and, close to the expiry date, the processor activates the piezoelectric acoustic signalling device so that it emits a sound to warn the consumer that the product is about to expire and that the product must therefore be consumed as soon as possible.

Such a solution, although it achieves the object of signalling to a consumer the imminent expiry of a food product, nevertheless has a number of drawbacks.

Firstly, it comprises a certain number of electronic components, which may be subject to damage and therefore may not work properly, or not work at all, in the presence of low temperatures, typically when the food product packaging closed by the clip is stored in a refrigerator.

Moreover, since it is provided with a solar energy battery, the clip according to the prior art might not function if used to close packages which are subsequently stored inside a dark environment, for example a kitchen cabinet.

Finally, the numerous electronic components present in the clip increase significantly the production costs and complicate the ease of use thereof.

EP 2 322 999 A2, which represents the closest prior art document, US 2013/076488 A1, and US 2009/268989 A1 disclose apparatuses according to the prior art.

### Summary of the invention

The main object of the present invention is therefore to provide a system for preserving foodstuffs which is able to overcome, or at least limit, the drawbacks mentioned with respect to the known devices described above.

In particular, the main object of the present invention is to provide a system for preserving foodstuffs which has the function of indicating to the consumer the imminent expiry of a foodstuff and is such as to be able to operate in any food storage environment, namely both in low temperature environments, for example inside a refrigerator, and in environments where there is no light, for example inside a kitchen cabinet.

Another object of the present invention is to provide a system for preserving foodstuffs with the function of indicating to the consumer the imminent expiry of a foodstuff, which has a simplified structure and low production cost.

Last but not least, an object of the present invention is to provide a system for preserving foodstuffs with the function of indicating to the consumer the imminent expiry of a foodstuff, which may be used in a simple and immediate manner.

The invention therefore relates to a system according to claim 1.

It is clear how the presence of the wireless communication module allows a user to be informed about the expiry of the food to be stored.

Further preferred aspects of the invention are described in the dependent claims.

In the description below and in the accompanying claims, the expression "intelligent portable device" is understood as referring to any type of portable electronic device able to be connected to other devices or to a network by means of a communication protocol, such as Bluetooth^{®}, NFC, Wi-Fi, 3G, etc., able to operate in an interactive and autonomous manner. Examples of such intelligent portable devices include a smartphone, a palmtop computer or PDA (Personal Digital Assistant), a tablet, a laptop and similar devices.

In the description below and in the accompanying claims, the expressions "bag closing clip associated with a food product" and "bag closing clip associated with a bag" are understood as meaning a clip used to close a bag containing a food product.

In the description below and in the accompanying claims, the expression "food product associated with the bag closing clip" is understood as referring to a food product contained inside a bag closed by the clip.

### Brief description of the drawings

Further features and advantages of the present invention will emerge more clearly from the following detailed description of preferred embodiments of a device for preserving foodstuffs provided hereinbelow by way of a non-limiting example with reference to the accompanying drawings. In the drawings:
- Figure 1 shows a perspective view of a first embodiment, in which the device according to the present invention consists of a bag closing clip, the clip being shown in the position for use or closing a bag containing a food product;
- Figure 2 is a perspective view of the bag closing clip according to Figure 1 in the position where it is not used and closed;
- Figure 3 is a perspective view of the bag closing clip according to Figure 1 in the open position before being used to close the bag;
- Figure 4 is a perspective view, similar to that of Figure 3, which shows the bag closing clip of Figure 3 and a fastener partially extracted therefrom;
- Figure 5 is a perspective view of the fastener according to Figure 4;
- Figure 6 is a perspective view of a bag closing clip according to an alternative embodiment;
- Figure 7 is a plan view of the bag closing clip according to Figure 6;
- Figure 8 is a side view of the bag closing clip according to Figure 6;
- Figures 9a to 9c show three views of three examples in which the device consists of a lid;
- Figures 10a and 10b show two views of two further examples, in which the device consists of a container;
- Figures 11 and 12 are diagrams which show in schematic form alternative modes of operation of the system according to the present invention in its configuration as a bag closing clip; and
- Figures 13 and 14 are diagrams which show in schematic form alternative modes of operation of the device in its configuration as a foodstuff container.

### Description of preferred embodiments

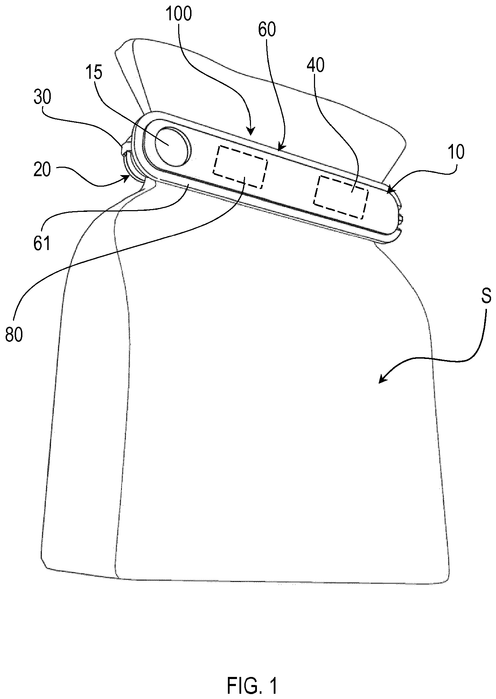

With reference to Figures 1 to 5, these show a first embodiment of a system for preserving foodstuffs according to the present invention.

In particular, the device consists of a bag closing clip, indicated in general by the reference number 100, which is used to close a bag S containing a food product or foodstuff, once opened, so as to safeguard the freshness and the integrity of the food product or foodstuff contained inside the bag.

The bag closing clip 100 comprises a first element 10 and a second element 20 hinged together at a respective end by a hinge 30. Preferably, the first element 10, the second element 20 and the hinge 30 are made of plastic material.

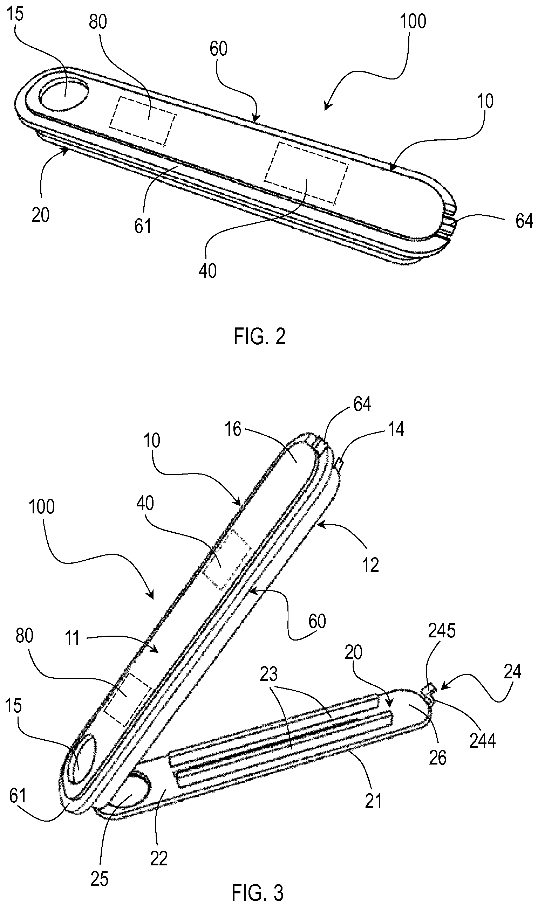

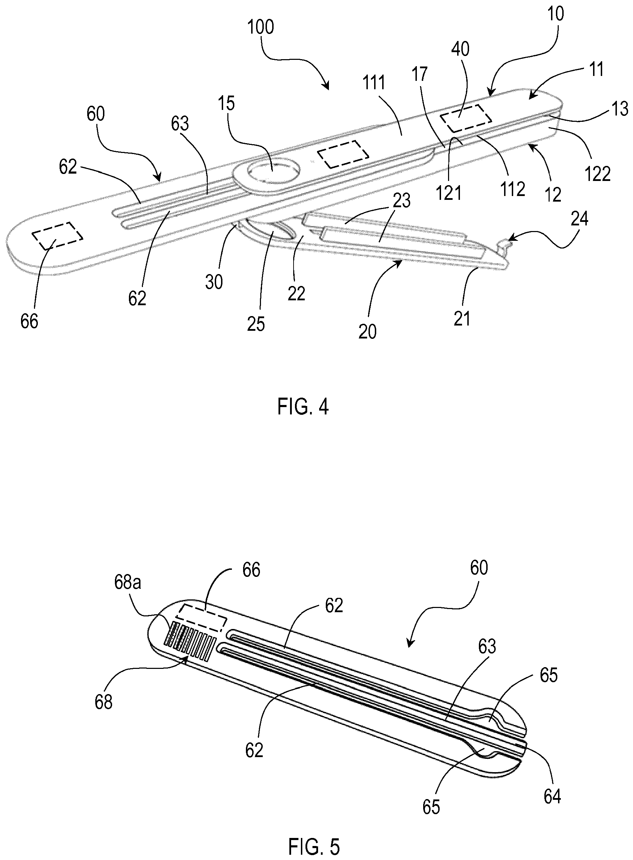

As shown in detail in Figures 3 and 4, the first element 10 has an elongated plate-like body, a box-shaped body 12, extending below from the oblong plate-like body 11, and rigid means 13 for connecting together the elongated plate-like body 11 and the box-shaped body 12.

The elongated plate-like body 11 comprises a top side 111 and a bottom side 112. The box-shaped body 12 has a top surface 121 facing the bottom side 112 of the elongated plate-like body 11 and suitably spaced therefrom by the rigid connection means 13, and an edge 122, extending perimetrally from the top surface 111, in the opposite direction to that of the elongated plate-like body 11.

The top surface 121 of the box-shaped body 12 has a length substantially corresponding to that of the elongated plate-like body 11.

The means for rigidly connecting together the elongated plate-like body 11 and the box-shaped body 12 consist of a pair of pegs 13 (only one of which is shown in Figure 4), suitably spaced from each other.

The pegs 13 are provided at respective ends of the elongated plate-like body 11 and the box-shaped body 12 opposite to the ends for hinging together the first element 10 and the second element 20 of the bag closing clip 100. In particular, the pegs 13 extend between the bottom side 112 of the elongated plate-like body 11 and the top surface 121 of the box-shaped body 12.

An interspace 17, the function of which will become clearer in the following of the presence description, is therefore defined between the elongated plate-like body 11 and the box-shaped body 12.

The second element 20 of the bag closing clip 100 has a form substantially similar to that of the elongated plate-like body 11 of the first element 10 and has a bottom side 21 and a top side 22 which faces the box-shaped body 12 of the first element 10.

A pair of longitudinal projections 23, preferably parallel to each other, extend upwards from the top side 22 of the second element 20. During use of the bag closing clip 100, these longitudinal projections 23 act as elements for clamping the bag S so as to ensure positioning thereof between the first element 10 and the second element 20.

Preferably, the longitudinal projections 23 are formed as one piece with the second element 20. Alternatively, the longitudinal projections 23 are joined - for example glued, interlocked or connected in a similar way - to the top surface 22 of the second element 20 of the bag closing clip 100.

The first element 10 and the second element 20 of the bag closing clip 100 have, at their respective free end 16, 26, opposite to the hinging end, releasable locking means.

In the preferred embodiment shown in Figures 1 to 5, the releasable locking means comprise, in particular, a tongue 24, extending from the free end 26 of the second element 20, and a tooth 14, associated with the free end 16 of the first element 10. Alternatively, it is possible to provide the tooth on the second element and the tongue on the first end of the bag closing clip.

As shown in detail in Figure 3, the tongue 24 comprises a curved section 244, projecting outwards from the second element 20, and a lug 245, extending from a free end of the curved section 245.

In the closed position of the bag closing clip 100, shown in Figures 1 and 2, the tooth 14 is engaged in an interlocking manner inside the curved section 244 of the tongue 24 and, in the open position of the bag closing clip 100, the tooth 14 is released from the curved section 244 of the tongue 24.

Let us assume, for example, that a user wishes to open the bag closing clip 10 in order to access the food product contained inside the bag S.

In this case, the user presses the lug 245 of the tongue 24 so as to cause the tooth 14 to be disengaged from the curved section 244 of the tongue 24. At this point, the first element 10 and the second element 20 of the bag closing clip 100 are disengaged at their respective free ends 16 and 26 and the bag S is open. The user may therefore use the food product contained inside the bag S.

Once the desired amount of food product has been extracted from the bag S, in order to close the bag S again, the user positions the open top part of the bag S between the first element 10 and the second element 20 of the bag closing clip 100 and then moves the first element 10 and the second element 20 towards each other until the tooth 14 of the first element 10 engages in an interlocking manner inside the curved section 244 of the tongue 24 of the second element 20.

The top side 111 of the oblong plate-like body 11 has, formed therein, a recess 15, preferably circular in shape, which has a colour different from that of the other components of the bag closing clip 100, which preferably have a neutral colour, for example grey or white. This allows advantageously the user to recognise easily the bag closing clip 100, and therefore the food product contained inside the bag S associated with it, on a kitchen shelf or inside a refrigerator.

Preferably, the second element 20 of the bag closing clip 100 has, on its top side 22, a recess 25 similar to the recess 15 and coaxial therewith. The recess 25 has a colour the same as that of the recess 15 and therefore different from that of the bag closing clip 100.

The bag closing clip 100 has moreover a wireless communication module 40 which is joined together with the first element 10 or the second element 20.

Preferably, the wireless communication module 40 is a short-range wireless communication module, for example a Bluetooth^{®} wireless communication module or an NFC (Near Field Communication) wireless communication module.

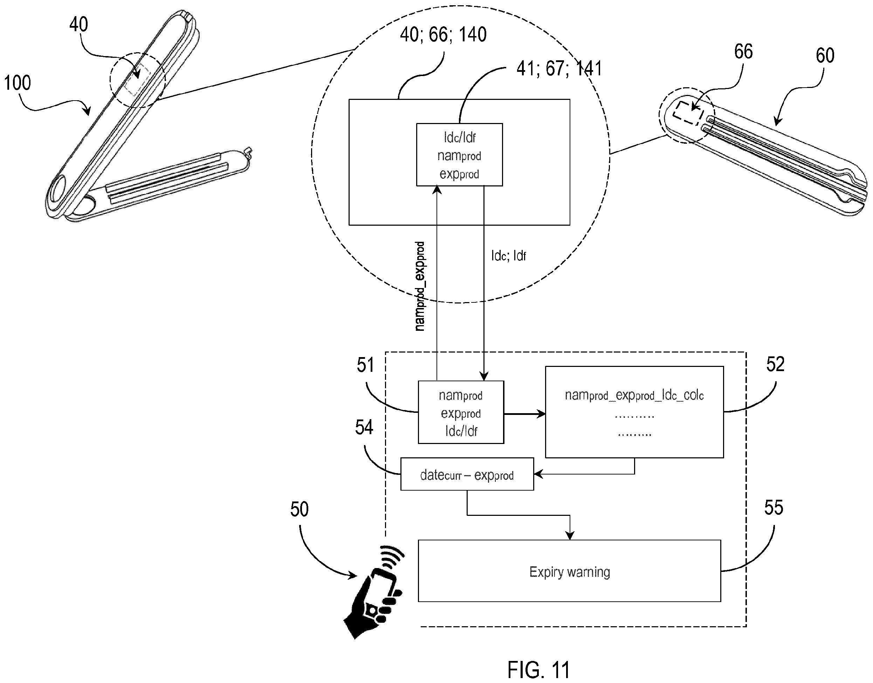

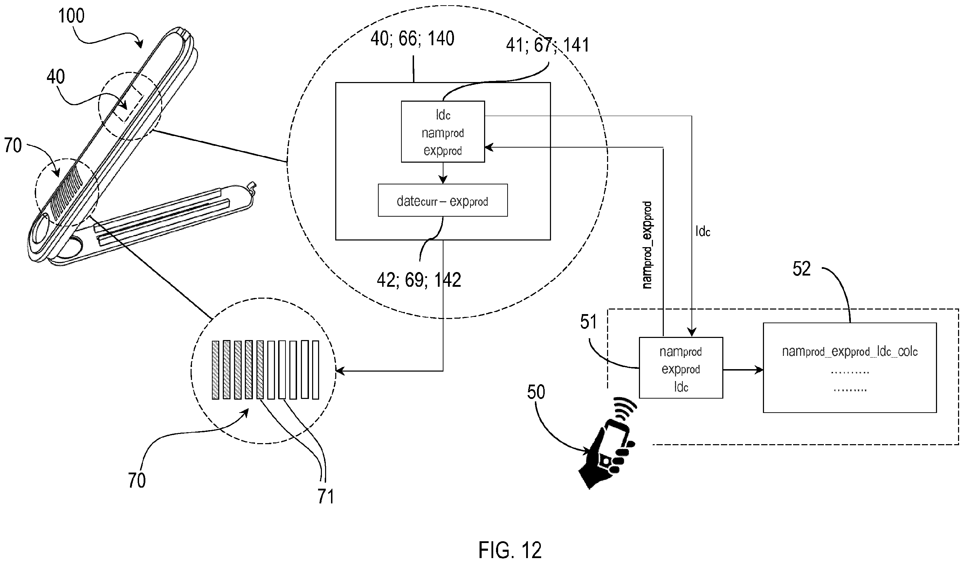

The wireless communication module 40 of the clip 100 is configured to communicate with an intelligent portable device 50 of the user (see Figures 11 and 12).

As shown schematically in Figures 11 and 12, the wireless communication module 40 comprises a memory unit 41 configured to store information relating to the food product contained inside the bag S closed by the bag closing clip 100, in particular the name of the product and the associated expiry date, transmitted to the bag closing clip 100 from the intelligent portable device 50.

For this purpose, and as shown in detail in Figures 11 and 12, the intelligent portable device 50 comprises a wireless communication module 51, which is similar to the wireless communication module 40 of the bag closing clip 100, and an application 52. A code identifying the bag closing clip 100 is also stored inside the memory unit 41 of the wireless communication module 40.

In an alternative embodiment, shown in Figure 12, the bag closing clip 100 also comprises visual signalling means 70 which are configured to indicate to the user how many days are left before expiry of the food product associated with the bag closing clip 100.

In particular, the visual signalling means 70 are provided on the first element 10 of the bag closing clip 100, more specifically on the top side 111 of the elongated plate-like body 11, so as to be easily and immediately visible by the user. Obviously, the visual signalling means may be positioned at any other point on the bag closing clip, for example on the second element 20, provided that they satisfy the condition of being visible to the user.

In the embodiment shown in Figure 12, the visual signalling means 70 comprise a LED (Light Emitting Diode) array 71, for example ten LEDs, one for each day left before the expiry date.

In this embodiment, the wireless communication module 40 of the bag closing clip 100 is a wireless communication module of the active type, preferably an active NFC module, which comprises a timer 42.

The timer 42 is configured to perform a countdown between a current date date_{curr} and the expiry date exp_{prod} of the product associated with the bag closing clip 100 and, as this expiry date exp_{prod} approaches, to activate lighting-up of a number of LEDs 71 equal to the number of days left before expiry of the product.

Preferably, and as shown for example in Figure 1, the bag closing clip 100 also has at least one organoleptic sensor 80, which is configured to detect the organoleptic properties, such as appearance, colour, form, smell and taste, of the foodstuff contained inside the bag S and to be activated so as to inform the user when at least one of these organoleptic properties is no longer present.

The bag closing clip 100 also comprises battery power supply means of the known type (not shown) for the LEDs 71, the timer 42 and the organoleptic sensor 80.

Preferably, the bag closing clip 100 comprises a fastener 60, which is preferably made of plastic and is housed extractably inside the interspace 17 formed between the elongated plate-like body 11 and the box-shaped body 12 of the first element 10.

The fastener 60 is preferably a bag closing fastener for food products. However it could also be used as a fastener for documents or sheets of paper.

As shown in detail in Figure 5, the fastener 60 has a thickness such as to allow insertion/extraction thereof into/from the interspace 17 formed in the bag closing clip 100. Moreover, the fastener 60 has a surface area such that, when it is in position inside the interspace, a peripheral portion 61 thereof projects from the first element 11 of the bag closing clip 100. This is clearly shown in Figures 1 to 3.

Preferably, the fastener 60 has the same colour as the recess 15 present in the top element 11 of the bag closing clip 100.

The fastener 60 also has, formed therein, a pair of channels 62 between which a substantially flexible fin 63 is formed.

In the vicinity of a free end 64 of the fin 63, the fastener 60 has a pair of recesses 65 arranged on opposite sides of the fin 63.

As shown in Figures 1 to 3, when the fastener 60 is in its position fully inserted inside the interspace 17, each recess 65 is designed to receive a respective peg 13 for joining together the elongated plate-like element 11 and the box-shaped body 12 of the first element 11 of the bag closing clip 100. Moreover, in the fully inserted position of the fastener 60 inside the interspace 17, the free end 64 of the fin 63 projects from the bag closing clip 100, after passing between the pair of pegs 13.

The fastener 60 also has a wireless communication module 66 which is entirely similar to that provided in the bag closing clip 100. Preferably, the wireless communication module 66, which is preferably of the Bluetooth^{®}, more preferably of the NFC type, is configured to communicate with the corresponding wireless communication module 51 of the intelligent portable device 50 of the user.

In a way entirely similar to that of the wireless communication module 40 of the bag closing clip 100, the wireless communication module 66 of the fastener 60 comprises a memory unit 67 (Figure 11) and preferably a timer 69 (Figure 12). An identification code for the fastener 60 is stored in the memory unit 67.

Preferably, the fastener 60 has visual signalling means 68. These visual signalling means 68 are entirely similar and have the same function as the visual signalling means 70 of the bag closing clip 100 and, for this reason, they will not be described further. Preferably, the visual signalling means 68 comprise an array of LEDs 68a. Moreover, in the case where the fastener 60 is used to close a bag containing food products or foodstuffs, it has an organoleptic sensor (not shown).

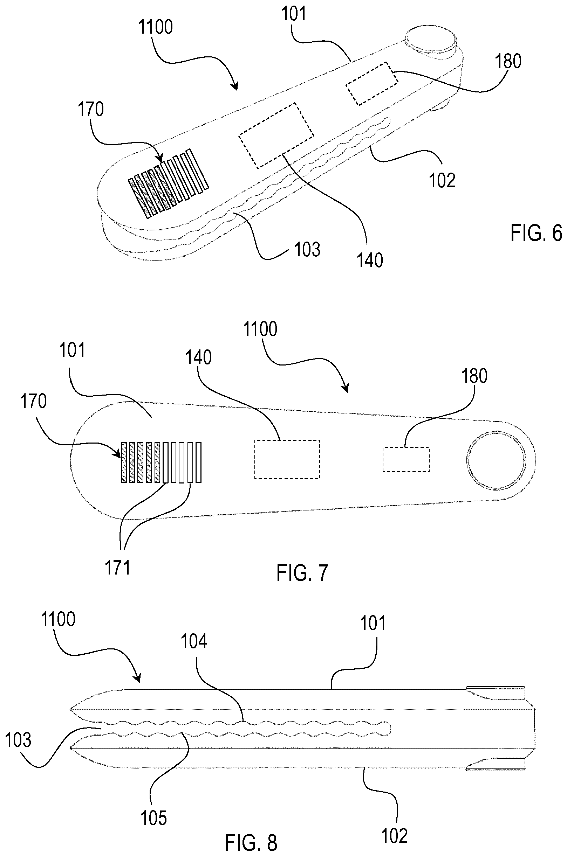

With reference to Figures 6 to 8, these show a bag closing clip according to an alternative embodiment of the device for preserving foodstuffs according to the present invention.

The bag closing clip, which is indicated in general by the reference number 1100, comprises a first elongated element 1001 and a second elongated element 101 which are rigidly connected together at a respective end. An interspace 103, inside which the open top part of the bag S is forcibly inserted, so as to close the bag, is therefore defined between the first elongated element 101 and the second elongated element 102.

Preferably, the first elongated element 101 and the second elongated element 102 have undulating oppositely arranged surfaces 104, 105, which allow better clamping of the top part of the bag S which is closed between them.

The first elongated element 101 and the second elongated element 102 have preferably the same form and are preferably made of plastic material.

The clip 1100 also has a wireless communication module 140 which is entirely similar to that provided in the bag closing clip 100. Preferably, the wireless communication module 140, which is preferably of the Bluetooth^{®}, more preferably of the NFC type, is configured to communicate with the corresponding wireless communication module 51 of the intelligent portable device 50 of the user.

In a way entirely similar to that of the wireless communication module 40 of the bag closing clip 100, the wireless communication module 140 of the clip 1100 comprises a memory unit 141 (Figure 11) and preferably a timer 142 (Figure 12). An identification code for the clip 1100 is stored in the memory unit 141.

Preferably, the clip 1100 has visual signalling means 170. These visual signalling means 170 are entirely similar and have the same function as the visual signalling means 70 of the bag closing clip 100 and, for this reason, they will not be described further. Preferably, the visual signalling means 170 comprise an array of LEDs 171.

Preferably, the clip 1110 also has an organoleptic sensor 180 and/or battery power supply means of the known type (not shown).

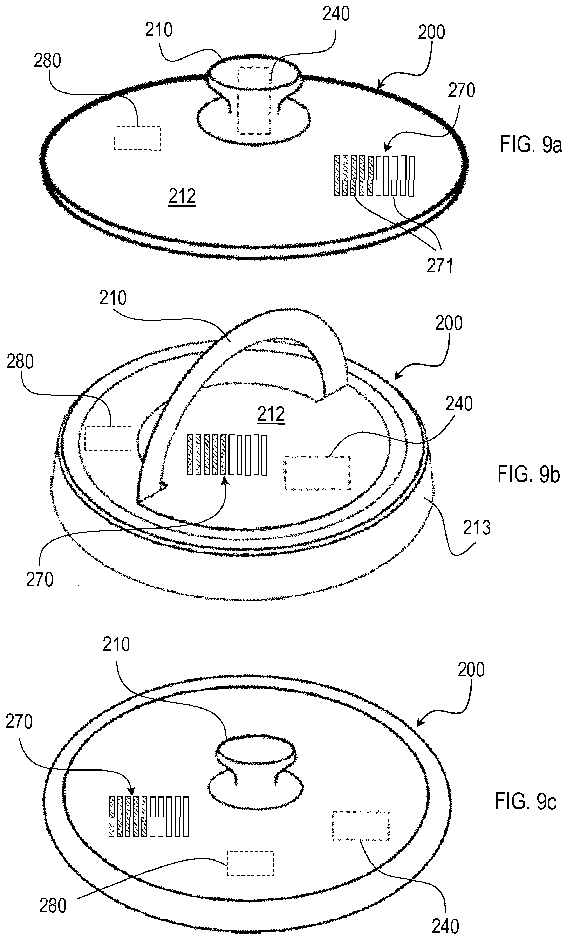

With reference to Figures 9a to 9c, they show further alternative examples of the device for preserving foodstuffs that are not part of the present invention. According to the examples shown in Figures 9a to 9c, the device consists of a lid 200 designed to close a storage space of a container suitable for storing the foodstuffs.

The lid 200 in the figures is shown in different embodiments, but each embodiment has gripping means 210 for allowing the user to grip the lid 200.

In the example shown in Figure 9a, the lid 200 consists of a flat element 212 onto which a knob for gripping the lid 200 is fixed.

The lid 200 has a wireless communication module 240 which is entirely similar to the wireless communication module 40 described above with reference to the bag closing clip 100.

The wireless communication module 240 may be provided on or fixed to the top surface or the bottom surface of the flat element 212 or inserted inside a special receiving seat formed in the thickness of the flat element 212.

As shown in Figure 9a, it is envisaged that the wireless communication module 240 is inserted inside a space formed within the knob 210.

The wireless communication module 240, which is preferably of the Bluetooth^{®}, more preferably of the NFC type, is configured to communicate with the corresponding wireless communication module 51 of the intelligent portable device 50 of the user.

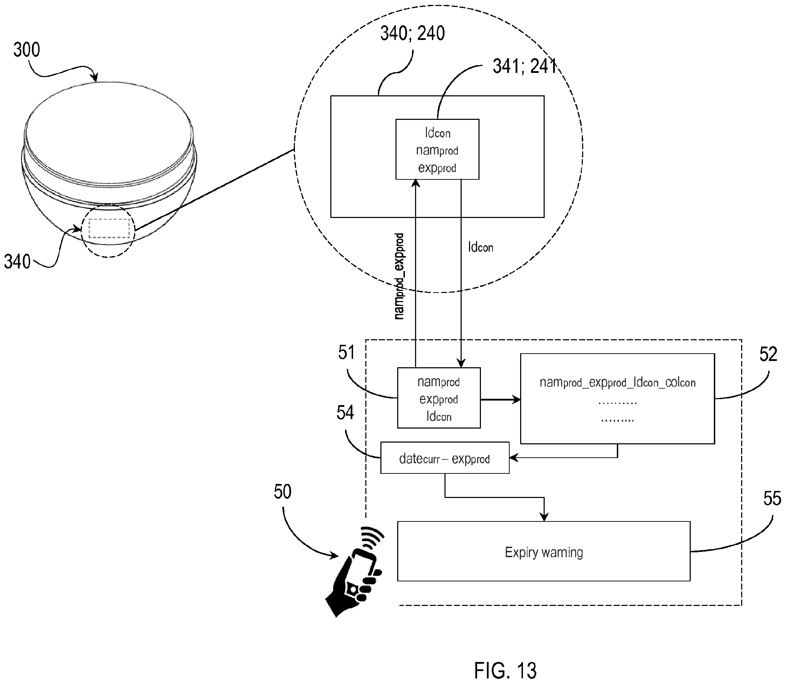

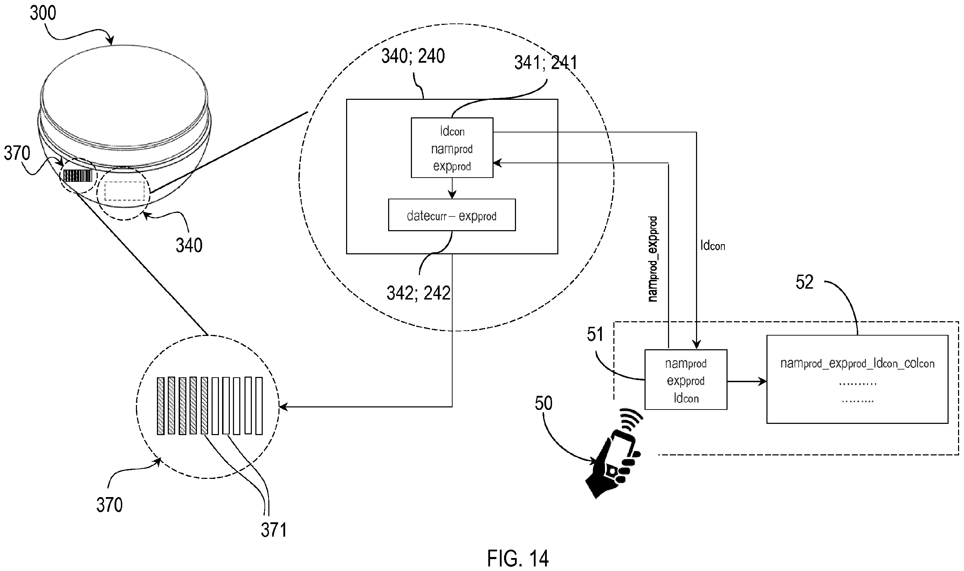

In a way entirely similar to that of the wireless communication module 40 of the bag closing clip 100, the wireless communication module 240 of the lid 200 comprises a memory unit 241 (Figure 13) and preferably a timer 242 (Figure 14). An identification code for the lid 200 is stored in the memory 242.

Preferably, the lid 200 has visual signalling means 270. These visual signalling means 270 are entirely similar and have the same function as the visual signalling means 70 of the bag closing clip 100 and, for this reason, will not be described further. Preferably, the visual signalling means 270 comprise an array of LEDs 271.

In particular, the visual signalling means 270 may be provided on the outer surface of the lid 200 so as to be visible to a user.

Preferably, the lid 200 also has at least one organoleptic sensor 280 and/or battery power supply means of the known type (not shown).

In the example thereof shown in Figure 9b, the lid 200 has a peripheral edge 213 which allows the lid 200 to be fixed to a container.

The peripheral edge 213 may, for example, be threaded so as to cooperate with a corresponding thread provided on the container or may be made of an elastically deformable material so as to surround and grip the top part of a container if present.

Figure 9c shows a further possible example of the lid 200, in which the lid is made of an elastically deformable material, such as silicone, rubber, polymers and the like. Such a lid is advantageously adaptable to any known container used for preserving foodstuffs.

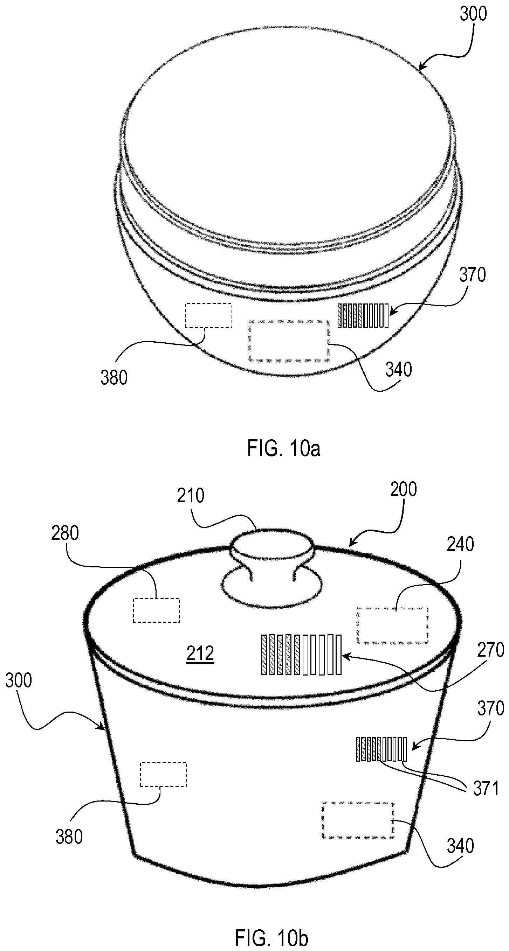

Figures 10a and 10b show another example, in which the device consists of a container 300 for foodstuffs, in which a wireless communication module 340 of the type entirely similar to the wireless communication module 40 described above and shown with reference to the bag closing clip 100 is provided.

Such an example is particularly advantageous since the container 300 may be used for any type of food, be it solid or liquid, or may even be used to contain different types of foods, which preferably should have the same expiry date. An example in this connection may be the containers which are commonly used in refrigerators to contain cheeses, fruit or vegetables: the expiry date of such foods may be easily monitored owing to the presence of the wireless communication module 340.

As for the lid 200, it is envisaged that the wireless communication module 340 of the container 300 may be fixed on the inside or the outside of the side walls or bottom walls of the container 300, or a space may be formed inside the thickness of the said walls to allow seating of the wireless communication module 340.

The wireless communication module 340, which is preferably of the Bluetooth^{®}, more preferably of the NFC type, is configured to communicate with the corresponding wireless communication module 51 of the intelligent portable device 50 of the user.

In a way entirely similar to that of the wireless communication module 40 of the bag closing clip 100, the wireless communication module 340 of the container 300 comprises a memory unit 341 (Figure 13) and preferably a timer 342 (Figure 14). An identification code for the container 300 is stored in the memory unit 342.

Preferably, the container 300 has visual signalling means 370. These visual signalling means 370 are entirely similar and have the same function as the visual signalling means 70 of the bag closing clip 100 and, for this reason, will not be described further. Preferably, the visual signalling means 370 comprise an array of LEDs 371.

In particular, the visual signalling means 370 may be provided on the side walls of the container 300 so as to be visible to a user.

Preferably, the container 300 also has at least one organoleptic sensor 380 and/or battery power supply means of the known type (not shown).

As shown in Figure 10b, it is possible to provide the container 300 in combination with the lid 200 described above with reference to Figures 9a to 9c. In this way there are two wireless communication modules available, i.e. the wireless communication module 240 of the lid 200 and the wireless communication module 340 of the container 300, these communicating with the same intelligent portable device 50 and operating in synergism, for example so as to check the expiry dates of two different types of food present inside the container 300 or to monitor two different parameters of the same food, for example two different dates, such as the expiry date and the date by which the food must be preferably eaten.

As described above, an identification code may be associated with the lid 200 and/or the container 300.

It is possible to envisage that a single lid 200 or a single container 300 may have more than one wireless communication module 240, 340. In this case, the identification code will be associated with the wireless communication module 240, 340 and not with the lid 200 or the container 300.

With reference to Figure 11, the operation of a system for preserving foodstuffs according to the present invention having the form of a bag closing clip is now described.

The operation will be described with reference to the bag closing clip 100 and the fastener 60, once extracted from the receiving interspace 17 present in the bag closing clip 100, although the same comments are entirely applicable to the bag closing clip 110 described above and illustrated in Figures 6 to 8.

In the following of the present description reference will be made to a smartphone 50 by way of intelligent portable device, but it is understood that the comments are also applicable to any intelligent portable device available to the user and suitable for the purpose.

Firstly, the user, by means of the application 52 present inside the smartphone 50, enters the name name_{prod} and expiry date exp_{prod} of a food product contained inside a bag S. For example <mozzarella; 1_april_2017>.

Then the user moves the smartphone 50 towards the bag closing clip 100, typically to a distance of not more than 10 cm, where the smartphone 50 is able to detect the presence of the bag closing clip 100 or the fastener 60, more particularly of the respective wireless communication modules 40, 66.

At this point, the wireless communication module 40 of the bag closing clip 100 and the wireless communication module 51 of the smartphone 50 are able to communicate with each other.

In particular:
- the wireless communication module 40 of the bag closing clip 100 transmits the identification code Id_{c} of the bag closing clip 100, which is stored in the memory 41, to the wireless communication module 51 of the smartphone 50; and
- the wireless communication module 51 of the smartphone 50 transmits the name nam_{prod} and expiry date exp_{prod} of the food product previously entered by the user via the application 52 of the smartphone 50, for example <mozzarella; 1_april_2017>, to the wireless communication module 40 of the bag closing clip 100.

This data is stored, together with the identification code Id_{c}, in the memory 41 of the wireless communication module 40.

In an entirely similar manner, the wireless communication module 66 of the fastener 60 and the wireless communication module 51 of the smartphone 50 are able to communicate with each other.

In particular:
- the wireless communication module 66 of the fastener 60 transmits an identification code Id_{f}for the fastener 60 to the wireless communication module 51 of the smartphone 50; and
- the wireless communication module 51 of the smartphone 50 transmits the name nam_{prod} and expiry date exp_{prod} of the food product previously entered by the user, for example <salad; 29_march_2017>, to the wireless communication module 66 of the fastener 60.

This data is stored, together with the identification code Id_{f}, in the memory 67 of the wireless communication module 66.

Following this exchange of information, the food product contained in the bag S, the expiry date of the food product and the clip 100 or fastener 60 used to close the bag S containing the product are associated with each other. This association, for example <mozzarella; 1_april_2017_Id_{c}> or <salad-29_march_2017_Id_{f}> is present both on the bag closing clip 100 or fastener 60, in particular in the memory 41 or 67 of its wireless communication module 40, 66, and in the application 52 of the smartphone 50.

As described above, a colour is preferably associated with the bag closing clip 100 and the fastener 60. As a result, by means of the application 52, the user may associate with the product, expiry date and identification code Idₘ or Id_{g} of the bag closing clip 100 or fastener 60 also the associated colour col_{c} or col_{f}, for example, in the case of the bag closing clip 100: <mozzarella; 1_april_2017_Id_{c}_red>.

An entirely similar process may be adopted for any other bag closing clip 100 and/or fastener 60 available to the user and may be used by the latter to close any product provided with an expiry date.

The smartphone 50 includes a timer 54 by means of which the application 52 may perform a countdown between the current date date_{curr} and the expiry date exp_{prod} of each product and, close to this expiry date exp_{prod}, for example when there are two days to go before expiry of the product, namely exp_{prod} - date_{curr} = 2, may display on the screen 55 of the smartphone 50, for each product, an expiry warning message.

The user is thus made aware of the fact that, for example, the mozzarella contained in the bag S closed by the red-coloured bag closing clip 100 is about to expire and must therefore be eaten.

Similarly, the user is made aware of the fact that the salad contained inside the bag S closed by the red coloured fastener 60 is about to expire and must be eaten.

Let us assume instead that the user wishes to know the expiry date of one or more products contained, for example, inside a refrigerator.

To do so, the user moves the smartphone 50 towards the bag closing clips 100 and/or fasteners 60 associated with the food products concerned. The wireless communication module 40, 66 of each bag closing clip 100 and/or fastener 60 then transmits the name nam_{prod} and expiry date exp_{prod} of the product contained inside the respective bag S to the wireless communication module 51 of the smartphone 50 and this information is displayed, by means of the application 52, on the screen 55 of the intelligent portable device 50 in the form of an expiry warning message.

Once the food product contained inside the bag S has been eaten, the bag closing clip 100 or fastener 60 may be used to close another bag S.

For this purpose, the memory 41, 67, respectively, of the wireless communication module 40 of the bag closing clip 100 and the wireless communication module 66 of the fastener 60 may be erased and the name and expiry date of a new food product may be stored in them in the manner described above.

Preferably, the application 52 of the smartphone 50, depending on the type of products about to expire, may suggest to the user recipes which use these products as ingredients. This allows, advantageously, a further reduction in possible waste.

With reference to Figure 7, operation of the bag closing clip 100 in its embodiment comprising a wireless communication module 40 of the active type, a timer 42 and visual signalling means 70 is now described. Obviously entirely the same comments are applicable to the fastener 60 in its embodiment comprising the visual signalling means 68.

In this case also, as described above with reference to Figure 11, firstly the user, by means of the application 52 present inside the smartphone 50, enters the name nam_{prod} and expiry date exp_{prod} of a food product associated with the bag closing clip 100.

Then the user moves the smartphone 50 towards the bag closing clip 100, typically to a distance of not more than 10 cm, where the smartphone 50 is able to detect the presence of the bag closing clip 100, more particularly of the respective wireless communication module 40.

At this point, the wireless communication module 40 of the bag closing clip 100 and the wireless communication module 51 of the smartphone 50 are able to communicate with each other.

In particular:
- the wireless communication module 40 of the bag closing clip 100 transmits an identification code Id_{c} of the bag closing clip 100 to the wireless communication module 51 of the smartphone 50; and
- the wireless communication module 51 of the smartphone 50 transmits the name nam_{prod} and expiry date exp_{prod} of the food product previously entered by the user to the wireless communication module 40 of the bag closing clip 100. This data is stored, together with the identification code Id_{c}, in the memory 41 of the wireless communication module 40.

Following this exchange of information the food product contained in the bag S, the expiry date of the food product and the clip 100 used to close the bag S containing the product are associated with each other.

As described above, a colour is preferably associated with the bag closing clip 100. As a result, by means of the application 52, the user may associate also the colour col_{c} with the product, the expiry date and identification code Id_{c} of the bag closing clip 100.

Let us assume, now, that the user wishes to know whether the product associated with the bag closing clip 100 is about to expire.

To do this, the user moves the smartphone 50 towards the bag closing clip 100 so as to active the wireless communication module 40, in particular the timer 42. Once activated, the timer performs a countdown between the current date date_{curr} and the expiry date of the product exp_{prod} and activates lighting-up of a number of LEDs, for example five LEDs, equal to the number of days left before expiry. The user is therefore made aware of the fact that the product will expire in five days.

With reference to Figures 13 and 14, the operation of a system for preserving foodstuffs wherein the device has the form of a container is now described. This example is not part of the present invention as defined by the appended claims.

Operation will be described with reference to the container 300, although entirely the same comments are applicable to the lid 200 or to a combination of lid 200 and container 300, described above and illustrated in Figures 9a to 9c and Figure 10b.

Operation is such that, firstly, the user, by means of the application 52 present inside the smartphone 50, enters the name nam_{prod} and expiry date exp_{prod} of a food product contained inside the container 300. For example <mozzarella; 1_april_2017>.

Then the user moves the smartphone 50 towards the container 300, typically to a distance of not more than 10 cm, where the smartphone 50 is able to detect the presence of the container 300, more particularly of the wireless communication module 340.

At this point, the wireless communication module 340 of the container 300 and the wireless communication module 51 of the smartphone 50 are able to communicate with each other.

In particular:
- the wireless communication module 340 of the container 300 transmits the identification code Id_{con} of the container 100, which is stored in the memory 341, to the wireless communication module 51 of the smartphone 50; and
- the wireless communication module 51 of the smartphone 50 sends the name nam_{prod} and expiry date exp_{prod} of the food product previously entered by the user via the application 52 of the smartphone 50, for example <mozzarella; 1_april_2017>, to the wireless communication module 340 of the container 300.

This data is stored, together with the identification code Id_{con}, in the memory 341 of the wireless communication module 340.

Following this exchange of information, the food product contained inside the container 300, the expiry date of the food product and the container 300 containing the product are associated with each other. This association, for example <mozzarella; 1_april_2017_Id_{c}> or <salad-29_march_2017_Id_{f}> is present both in the memory 341 of the wireless communication module 340 and in the application 52 of the smartphone 50.

It is possible to envisage that part of the container 300 as well as part of the lid 200 may have a specific colour. As a result, by means of the application 52, the use may associate with the product, expiry date, and identification code Id_{con} of the container 300 also the associated code col_{con}, for example <mozzarella; 1_april_2017_Id_{con}_red>.

The colour may be used as a label for more rapid identification of the foodstuff contained inside the container 300.

The smartphone 50 includes a timer 54 by means of which the application 52 may perform a countdown between the current date date_{curr} and the expiry date exp_{prod} of each product and, close to this expiry date exp_{prod}, for example when there are two days to go before expiry of the product, namely exp_{prod} - date_{curr} = 2, may display on the screen 55 of the smartphone 50, for each product, an expiry warning message.

The user is thus made aware of the fact that, for example, the mozzarella contained inside the red-coloured container is about to expire and must therefore be eaten.

Let us assume instead that the user wishes to know the expiry date of one or more products contained, for example, inside a refrigerator.

To do so, the user moves the smartphone 50 towards the various possible containers 300 and/or lids 200 associated with the food products concerned. The wireless communication module 340, 240 of each container and/or lid then sends the name nam_{prod} and expiry date exp_{prod} of the food product to the wireless communication module 51 of the smartphone 50 and this information is displayed, by means of the application 52, on the screen 55 of the intelligent portable device 50 in the form of an expiry warning message.

Obviously, once the food product has been eaten, the container 300 may be used again for another foodstuff.

For this purpose, the memory 341 of the wireless communication module 340 may be erased and the name and expiry date of a new food product may be stored in it in the manner described above.

With reference to Figure 14, operation of the container 300 in its embodiment comprising a wireless communication module 340 of the active type, a timer 342 and visual signalling means 370 is now described.

In this case also, as described above with reference to Figure 13, firstly the user, by means of the application 52 present inside the smartphone 50, enters the name nam_{prod} and expiry date exp_{prod} of a food product associated with or contained inside the container 300.

Then the user moves the smartphone 50 towards the container 300, typically to a distance of not more than 10 cm, where the smartphone 50 is able to detect the presence of the container 300, more particularly of the respective wireless communication module 340.

At this point, the wireless communication module 340 of the container 300 and the wireless communication module 51 of the smartphone 50 are able to communicate with each other. In particular:
- the wireless communication module 340 of the container 300 transmits an identification code Id_{con} of the container 300 to the wireless communication module 51 of the smartphone 50; and
- the wireless communication module 51 of the smartphone 50 transmits the name nam_{prod} and expiry date exp_{prod} of the food product previously entered by the user to the wireless communication module 340 of the container 300. This data is stored, together with the identification code Id_{con}, in the memory 341 of the wireless communication module 340. Following this exchange of information, the food product contained inside the container 300, the expiry date of the food product and the container 300 containing the product are associated with each other.

As described above, a colour is preferably associated with the container 300. As a result, by means of the application 52, the user may also associate the corresponding colour col_{con} with the product, expiry date, and identification code Id_{con} of the container 300.

Let us assume, now, that the user wishes to know whether the product associated with the container 300 is about to expire.

To do so, the user moves the smartphone 50 towards the container 300 so as to active the wireless communication module 340, in particular the timer 342. Once activated, the timer performs a countdown between the current date date_{curr} and the expiry date of the product exp_{prod} and activates lighting-up of a number of LEDs, for example five LEDs, equal to the number of days left before expiry. The user is therefore made aware of the fact that the product will expire in five days.

## Claims

1. System comprising a clip (100; 1100) for closing a bag (S) for foodstuff and an intelligent portable device (50), wherein the clip (100) comprises at least one wireless communication module (40; 140) configured to communicate with a corresponding wireless communication module (51) of the intelligent portable device (50);
**characterized in that** the wireless communication module (40; 140) of the clip comprises a memory unit (41; 141), said wireless communication module (51) of the intelligent portable device (50) transmits to the clip (100; 1100) the name (nam_{prod}) and expiry date (exp_{prod}) of a given foodstuff associated with the clip and previously entered in the intelligent portable device (50) by means of an application (52) of the intelligent portable device (50), the name (nam_{prod}) and expiry date (exp_{prod}) transmitted by the intelligent portable device (50) being stored in said memory unit (41; 141) and **in that** said wireless communication module (40; 140) of the clip (100; 1100) is also configured to transmit to the intelligent portable device (50) said name (nam_{prod}) and expiry date (exp_{prod}) previously stored therein.

2. System according to Claim 1, wherein the clip (100) comprises a first element (10), a second element (20), hinging means (30) for hinging together said first element (10) and second element (20), provided at a respective end of said first element (10) and second element (20), and means (14, 24) for releasably locking together said first element (10) and second element (20), provided at a free end (16, 26) of said first element (10) and second element (20), opposite to the hinging end.

3. System according to Claim 2, wherein said first element (10) has, formed therein, an interspace (13) designed to extractably receive a fastener (60) comprising a respective wireless communication module (66).

4. System according to claim 3, wherein said fastener (60) comprises a memory unit (67), the module (50) of the intelligent portable device (50) being configured to transmit to the fastener (60) the name (nam_{prod}) and expiry date (exp_{prod}) of a given foodstuff associated with the fastener, the name (nam_{prod}) and expiry date (exp_{prod}) being stored in the memory unit (67) and in that said wireless communication module (66) of the fastener (60) is also configured to transmit to the intelligent portable device (50) said name (nam_{prod}) and expiry date (exp_{prod}) previously stored therein.

5. System according to Claim 1, wherein the clip (1100) comprises a first elongated element (101) and a second elongated element (102) which are rigidly connected together at a respective end and between which an interspace (103) for forcibly inserting an open top part of the bag (S) is defined, said first elongated element (101) and second elongated element (102) having undulating opposite surfaces (104, 105).

6. System according to any one of the preceding claims, wherein the clip (100; 1100) comprises an identification code (Id_{c}; Id_{con}), said wireless communication module (40; 66; 140) being configured to send said identification code (Id_{c}; Id_{con}) to the intelligent portable device (50).

7. System according to any one of the preceding claims, wherein the clip (100; 1100) further comprises visual signalling means (70; 68; 170) and a timer (42; 69; 142) in electrical communication with said visual signalling means (70; 68; 170), said timer (42; 69; 142) being configured to perform a countdown between a current date (date_{curr}) and the expiry date of the foodstuff (exp_{prod}) and activate lighting-up of the visual signalling means (70; 68; 170).

8. System according to Claim 7, wherein said visual signalling means (70; 68; 170) comprise an array of LEDs (71; 68a; 171) and wherein said timer (42; 69; 142) is configured to activate lighting-up of a number of LEDs (71; 68a; 171) corresponding to the difference between the expiry date of the foodstuff (exp_{prod}) and the current date (date_{curr}).

9. System according to any one of the preceding claims, wherein the clip (100; 1100) further comprises at least one organoleptic sensor (80; 180).

10. System according to any one of the preceding claims, wherein the intelligent portable device (50) is a smart phone.

## Patentansprüche

1. System, das einen Clip (100; 1100) zum Verschließen eines Beutels (S) für Lebensmittel und eine intelligente tragbare Vorrichtung (50) aufweist, wobei der Clip (100) mindestens ein drahtloses Kommunikationsmodul (40; 140) aufweist, das derart konfiguriert ist, dass es mit einem entsprechenden drahtlosen Kommunikationsmodul (51) der intelligenten tragbaren Vorrichtung (50) kommuniziert; **dadurch gekennzeichnet, dass** das drahtlose Kommunikationsmodul (40; 140) des Clips eine Speichereinheit (41; 141) umfasst, wobei das drahtlose Kommunikationsmodul (51) der intelligenten tragbaren Vorrichtung (50) dem Clip (100; 1100) den Namen (nam_{prod} ) und das Verfallsdatum (exp_{prod} ) eines bestimmten Lebensmittels überträgt, das dem Clip zugeordnet ist und zuvor in die intelligente tragbare Vorrichtung (50) mittels einer Anwendung (52) der intelligenten tragbaren Vorrichtung (50) eingegeben wurde, wobei der Name (nam_{prod}) und das Verfallsdatum (exp_{prod}), die von der intelligenten tragbaren Vorrichtung (50) übertragen wurden, in der Speichereinheit (41; 141) gespeichert werden, und dass das drahtlose Kommunikationsmodul (40; 140) des Clips (100; 1100) auch derart konfiguriert ist, dass es den zuvor in dieser gespeicherten Namen (nam_{prod}) und Ablaufdatum (exp_{prod}) an die intelligente tragbare Vorrichtung (50) überträgt.

2. System nach Anspruch 1, wobei der Clip (100) ein erstes Element (10), ein zweites Element (20), eine Scharniereinrichtung (30) zum gelenkigen Verbinden des ersten Elements (10) und des zweiten Elements (20), die an einem jeweiligen Ende des ersten Elements (10) und des zweiten Elements (20) vorgesehen ist, und Mittel (14, 24) zum lösbaren Verriegeln des ersten Elements (10) und des zweiten Elements (20) miteinander aufweist, die an einem freien Ende (16, 26) des ersten Elements (10) und des zweiten Elements (20) gegenüber dem gelenkigen Ende vorgesehen ist.

3. System nach Anspruch 2, wobei das erste Element (10) einen darin ausgebildeten Zwischenraum (13) aufweist, der derart ausgebildet ist, dass er ein Verbindungselement (60) mit einem entsprechenden drahtlosen Kommunikationsmodul (66) herausziehbar aufnehmen kann.

4. System nach Anspruch 3, wobei das Verbindungselement (60) eine Speichereinheit (67) aufweist, wobei das Modul (50) der intelligenten tragbaren Vorrichtung (50) derart konfiguriert ist, dass es dem Verbindungselement (60) den Namen (nam_{prod}) und das Verfallsdatum (exp_{prod}) eines bestimmten Lebensmittels, das dem Verbindungselement zugeordnet ist, übermittelt, wobei der Name (nam_{prod}) und das Verfallsdatum (exp_{prod}) in der Speichereinheit (67) gespeichert sind, und dass das drahtlose Kommunikationsmodul (66) des Verbindungselements (60) auch derart konfiguriert ist, dass es den zuvor darin gespeicherten Namen (nam_{prod}) und das Verfallsdatum (exp_{prod}) an die intelligente tragbare Vorrichtung (50) überträgt.

5. System nach Anspruch 1, wobei der Clip (1100) ein erstes längliches Element (101) und ein zweites längliches Element (102) aufweist, die an einem jeweiligen Ende starr miteinander verbunden sind und zwischen denen ein Zwischenraum (103) zum kraftbeaufschlagten Einführen eines offenen oberen Teils des Beutels (S) definiert ist, wobei das erste längliche Element (101) und das zweite längliche Element (102) gewellte gegenüberliegende Oberflächen (104, 105) aufweisen.

6. System nach einem der vorhergehenden Ansprüche, wobei der Clip (100; 1100) einen Identifikationscode (Id_{c}; Id_{con}) umfasst, wobei das drahtlose Kommunikationsmodul (40; 66; 140) derart konfiguriert ist, dass es den Identifikationscode (Id_{c}; Id_{con}) an die intelligente tragbare Vorrichtung (50) sendet.

7. System nach einem der vorhergehenden Ansprüche, wobei der Clip (100; 1100) außerdem visuelle Signalisierungsmittel (70; 68; 170) und einen Zeitgeber (42; 69; 142) in elektrischer Verbindung mit den visuellen Signalisierungsmitteln (70; 68; 170) aufweist, wobei der Zeitgeber (42; 69; 142) derart konfiguriert ist, dass er einen Countdown von einem aktuellen Datum (date_{curr}) und zu dem Verfallsdatum des Lebensmittels (exp_{prod}) durchführt und das Aufleuchten der visuellen Signalisierungsmittel (70; 68; 170) aktiviert.

8. System nach Anspruch 7, wobei die optischen Signalisierungsmittel (70; 68; 170) eine Feldanordnung von LEDs (71; 68a; 171) aufweisen und wobei der Zeitgeber (42; 69; 142) derart konfiguriert ist, dass er das Aufleuchten einer Anzahl von LEDs (71; 68a; 171) aktiviert, die der Differenz zwischen dem Verfallsdatum des Lebensmittels (exp_{prod}) und dem aktuellen Datum (date_{curr}) entspricht.

9. System nach einem der vorhergehenden Ansprüche, wobei der Clip (100; 1100) außerdem mindestens einen organoleptischen Sensor (80; 180) umfasst.

10. System nach einem der vorhergehenden Ansprüche, wobei das intelligente tragbare Vorrichtung (50) ein Smartphone ist.

## Revendications

1. Système comprenant une pince (100 ; 1100) pour fermer un sac (S) pour produits alimentaires et un dispositif portable intelligent (50), dans lequel la pince (100) comprend au moins un module de communication sans fil (40 ; 140) configuré pour communiquer avec un module de communication sans fil correspondant (51) du dispositif portable intelligent (50) ;
**caractérisé par le fait que** le module de communication sans fil (40 ; 140) de la pince comprend une unité de mémoire (41 ; 141), ledit module de communication sans fil (51) du dispositif portable intelligent (50) transmet à la pince (100 ; 1100) le nom (nam_{prod}) et la date de péremption (exp_{prod}) d'un produit alimentaire donné associés à la pince et préalablement entrés dans le dispositif portable intelligent (50) au moyen d'une application (52) du dispositif portable intelligent (50), le nom (nam_{prod}) et la date de péremption (exp_{prod}) transmis par le dispositif portable intelligent (50) étant stockés dans ladite unité de mémoire (41 ; 141), et **par le fait que** ledit module de communication sans fil (40 ; 140) de la pince (100 ; 1100) est également configuré pour transmettre au dispositif portable intelligent (50) ledit nom (nam_{prod}) et ladite date de péremption (exp_{prod}) préalablement stockés dans celui-ci.

2. Système selon la revendication 1, dans lequel la pince (100) comprend un premier élément (10), un second élément (20), des moyens d'articulation (30) pour articuler ensemble ledit premier élément (10) et ledit second élément (20), disposés à une extrémité respective dudit premier élément (10) et dudit second élément (20), et des moyens (14, 24) pour verrouiller ensemble de manière libérable ledit premier élément (10) et ledit second élément (20), disposés à une extrémité libre (16, 26) dudit premier élément (10) et dudit second élément (20), à l'opposé de l'extrémité d'articulation.

3. Système selon la revendication 2, dans lequel ledit premier élément (10) a, formé dans celui-ci, un espace intermédiaire (13) destiné à recevoir de manière extractible une attache (60) comprenant un module de communication sans fil respectif (66).

4. Système selon la revendication 3, dans lequel ladite attache (60) comprend une unité de mémoire (67), le module (50) du dispositif portable intelligent (50) étant configuré pour transmettre à l'attache (60) le nom (nam_{prod}) et la date de péremption (exp_{prod}) d'un produit alimentaire donné associé à l'attache, le nom (nam_{prod}) et la date de péremption (exp_{prod}) étant stockés dans l'unité de mémoire (67), et ledit module de communication sans fil (66) de l'attache (60) étant également configuré pour transmettre au dispositif portable intelligent (50) ledit nom (nam_{prod}) et ladite date de péremption (exp_{prod}) précédemment stockés dans celui-ci.

5. Système selon la revendication 1, dans lequel la pince (1100) comprend un premier élément allongé (101) et un second élément allongé (102) qui sont rigidement reliés ensemble à une extrémité respective et entre lesquels est défini un espace intermédiaire (103) pour introduire de façon forcée une partie supérieure ouverte du sac (S), ledit premier élément allongé (101) et ledit second élément allongé (102) ayant des surfaces opposées ondulées (104, 105).

6. Système selon l'une quelconque des revendications précédentes, dans lequel la pince (100 ; 1100) comprend un code d'identification (Id_{c} ; Id_{con}), ledit module de communication sans fil (40 ; 66 ; 140) étant configuré pour envoyer ledit code d'identification (Id_{c} ; Id_{con}) au dispositif portable intelligent (50).

7. Système selon l'une quelconque des revendications précédentes, dans lequel la pince (100 ; 1100) comprend en outre des moyens de signalisation visuelle (70 ; 68 ; 170) et un minuteur (42 ; 69 ; 142) en communication électrique avec lesdits moyens de signalisation visuelle (70 ; 68 ; 170), ledit minuteur (42 ; 69 ; 142) étant configuré pour effectuer un compte à rebours entre une date courante (date_{curr}) et la date de péremption du produit alimentaire (exp_{prod}) et activer l'allumage des moyens de signalisation visuelle (70 ; 68 ; 170).

8. Système selon la revendication 7, dans lequel lesdits moyens de signalisation visuelle (70 ; 68 ; 170) comprennent un réseau de DEL (71 ; 68a ; 171), et dans lequel ledit minuteur (42 ; 69 ; 142) est configuré pour activer l'allumage d'un nombre de DEL (71 ; 68a ; 171) correspondant à la différence entre la date de péremption du produit alimentaire (exp_{prod}) et la date courante (date_{curr}).

9. Système selon l'une quelconque des revendications précédentes, dans lequel la pince (100 ; 1100) comprend en outre au moins un capteur organoleptique (80 ; 180).

10. Système selon l'une quelconque des revendications précédentes, dans lequel le dispositif portable intelligent (50) est un téléphone intelligent.
